# EUROPEAN PATENT APPLICATION

(11) **EP 2 549 618 A2**
(43) Date of publication of application: **23.01.2013**
(21) Application number: 11719843.2
(22) Date of filing: 22.02.2011
(51) Int. Cl.: H02J 7/00, B60L 8/00, B60L 11/18, F21S 8/08

(54) **SYSTEM FOR CONTROLLING AND MANAGING POWER RECHARGES, COMMUNICATION AND LIGHTING**

(30) Priority: 03.03.2010 ES 201030312
(71) Applicant: Salamanques Claver, Miguel, 50006 Zaragoza (ES); Salamanques Claver, Isabel, 50006 Zaragoza (ES)
(72) Inventor: SALAMANQUES FERNÁNDEZ, Raúl, E-50006 Zaragoza (ES)
(74) Representative: Ungria López, Javier
(86) International application number: PCT/ES2011/070108
(87) International publication number: WO 2011/107640

(57) **Abstract**

System for controlling and managing of the energy charging, communication and illumination, which based on multiple illumination lighting columns (3) scattered along the road and in the vicinity of which vehicles park, the invention consists of associating thereto a cabin (2) with a plurality of systems such as computer (6); communication (30); at least one multiprocessor equipment provided with communication and other elements (7), interconnected with the computer system (6); a network analyzer equipment (8); some socket outlets for charging (11) vehicles, electrical apparatus and devices and for power supply; some outlets (12) for computer equipment; some payment means (13); and other equipment with the object of obtaining a multifunction charging station to which a vending equipment (4) and some illuminating means defined by the lighting columns (3) can be added with at least, one lighting fixture (17) and one central administrator (5) which will be communicated with, at least, another set defined by a cabin (2) and a lighting column (3) for the telemanagement and control operations.

## Description

### OBJECT OF THE INVENTION

The following invention, as expressed in the statement of the present specification, is related to a teleprocessed energy charging, communication and illumination control and management system, which system is powered by electrical energy provided by the general network and/or any other utility grid for which is associated to one lighting fixture, such that the system comprises, among other means, some electric charging means, as well as some electrical connection and communication means with some payment means for said services and a computer system and some network analysis equipment, having as a first object allowing electric vehicles and/or other equipment or devices charging by the connection to a power supply.

Thus, through multiple public and/or private lighting fixtures the system power supply could be provided, leveraging the power network of the lighting fixtures itself for that purpose, leveraging its lighting columns as a support for other elements, leveraging its light spot as illumination of the system and leveraging its location, usually very suitable for facilitating the charging operations by being usually located close to the roads on the sidewalks.

A second object of the invention is allowing a communication connection for computer or other similar communication equipment or devices, which allows the use by any user, even by a user carrying out the charge of his/her electric vehicle, and while at the same time, carrying out different actions or tasks.

A third object of the invention is allowing at all times and by a telemanagement process, to know and control the power and services consumption provided by the whole set, even of the lighting means available, the payments made for the use of the services, as well detecting the failure or malfunction of any element of the set.

A fourth object of the invention is to have general illumination of the area where the system is located and particular for being able to carry out all the actions to be carried out.

For that purpose the system is provided with some payment means, of any kind, with all the provided services, with a computer system provided with processors, memory, communications protocols, communication equipment and specific software, as well as with a network analyzer equipment as complete as is required.

Optionally, the system may incorporate vending service of many different products, or rental of other being paid by the payment means that the system has, and controlled by the same.

### FIELD OF THE INVENTION

In the present specification a teleprocessed energy recharging, communication and illumination control and management system is described, which applies in both public and private places to give service to the public in general and which is electrically powered through the general network and/or any other power supply network.

Thus, the system applies to:
◆ recharging electric vehicles of all kinds;
◆ power supply for feeding and/or charging any electrical apparatus or device;
◆ connection with supply and communications of computers and other similar devices, and;
◆ lighting;
◆ lighting control;
◆ control of other systems (buses, traffic lights, meters, garages, etc.);
◆ satisfying the connectivity and communication needs of the citizens by the keyboard and display in an anti-vandalism case connected to the Internet through the system;
◆ temporary wiring layout and street intersections with the same.
◆ information and/or advertising diffusion, through the large displays of the lighting column;
◆ sale of products through all kinds of vending machines;
◆ rental of electric vehicles controlled by the system.
◆ knowledge of environmental parameters;
◆ remote control of all the services that it provides or it can provide, this being a telemanaged system;
◆ pressurized air supply to the equipments that need it, by means of a compressor;

And is also especially useful for;
◆ City Councils.
◆ Public strata and organisms.
◆ Private strata and organizations.
◆ General public.

### BACKGROUND OF THE INVENTION

As a background to the object of the invention we can consider a series of systems and devices, which are related in the following that are generally known, such as:
◆ public and/or private illumination systems, such as the already known streetlights, based on an energy supply system of the same, regardless of who the supplier is;
◆ collection systems using any type of payment system;
◆ communication systems of any kind and through any media and, especially, the type modem phone, TCP/IP, GPRS, WiMax, etc.;
◆ communications protocols, and, in particular, the LonWorks-type open protocols or similar;
◆ methods and devices for transmission by any means and in particular, those using dedicated cable, power line and radio frequency, computers, computer systems, hardware and software of all kinds running on them;
◆ Web Servers;
◆ measurement and analysis equipment of all types of network;
◆ protocols for phase analysis and other ModBus-type or similar;
◆ equipment for measuring environmental parameters of any type;
◆ electricity supply systems by type plug elements of all its forms and standardized nomenclature, either bipolar or multipolar or of any other known technological form;
◆ power transformers elements, as well as the systems of electricity production, whether conventional or alternative energies, as well as image and/or text and/or audio and/or data reproduction equipment, as well as the storage systems thereof;
◆ vending machines of any kind, and;
◆ ATMs and similar.

Likewise, we may consider various patent documents such as US 2003120442 wherein is described, only a control and management system for charging vehicles.

JP 2006293803 describes a system in which a vending machine is adapted for being able to perform the charging of vehicles.

GB 2438979 refers to a speaker reporting the charging data. In any case in no way a speaker itself is claimed, but the same is part of a "system" and is associated with the same, also in the patent application the same is controlled by the administrator of the system and is useful to inform the citizens of alerts and with an advertising purpose.

US 5202617 refers to a tester for the analysis of electric currents, such that the patent application allows the telemanagement and point to point control of the illumination systems.

In the previously cited patent document as well as in the document US 6154006 a reference to an alarm signal is made, such that in both cases a signal is activated in certain situations in a charging operation of a vehicle and none of them is by a push button as in the object of the patent application which, additionally, is useful for very different operations.

WO 2006113744 describes a personal charging station that uses different types of fuel and a source of alternative energy such as a solar panel.

Finally, in EP 2056916 a particular station is described, for charging in a house.

### DESCRIPTION OF THE INVENTION

In the present specification a system is described which is electric powered provided by the general grid network and/or any other grid based on the lighting fixtures itself, such that the system, additionally, comprises among other means, some electric charging means, as well as some electrical connection and communication means with some payment means for said services and a computer system, such that the system comprises, at least, a set consisting of:
◆ a lighting column with, at least, a lighting fixture and with, at least, one hook-like anchoring means at a high height;
◆ a cabin provided with:
   ◆ a computer system with specific software and a communications protocol;
   ◆ a communications system;
   ◆ at least, one equipment, interconnected with the computer system, provided with a multiprocessor, with communications and several inputs and outputs for connection to external peripherals and actuators;
   ◆ a network analyzer equipment;
   ◆ a multifunction display and a speaker;
   ◆ some power outlets for charging vehicles, electrical apparatus and devices and power supply;
   ◆ some data and/or communication and/or supply outlets for portable computer equipment;
   ◆ some payment means for the provided services;
   ◆ at least, one data recording equipment,
   ◆ an alarm button and an intercom, and,
   as well as;
◆ a central administrator communicated with, at least, one set defined by a cabin and a lighting column.

Thus, the system, electrically powered from the general network and/or any other grid, comprises, basically, a set defined by a lighting column with, at least, one lighting fixture providing electrical power and illumination when necessary and a cabin, which set will be designed, mainly, to supply electricity, and communications services that can be charged by the system itself, such that the lighting column and the cabin may form a physically unitary set, or they may be independent but interconnected by wiring,

Thus, it is about, in first place, taking advantage of the power supply of the lighting fixtures in public or private areas.

Likewise, the set consisting of a lighting column and a cabin can include, at least, one vending machine associated thereto and controlled by the computer system of the system and the equipment interconnected thereto or by its own means.

In a practical implementation of the invention the cabin itself features a vending device with some selection buttons of the product, being controlled by the payment means of the cabin and controlled by the computer system and the equipment interconnected thereto.

In short, the lighting column, the cabin and the vending machine or device can be made up of three separate physical structures, although associated with each other, which can facilitate the installation and even take advantage of the existing elements, such as the streetlights (lighting columns with the lighting fixture) already installed or it may be part of a single physical structure.

The computer system with a specific software, a communications protocol, a communications system and, at least, one associated equipment, included in the cabin, controls all the functions and is communicated, bidirectionally, with the system administrator.

Likewise, the computer system with specific software, a communications protocol, a communications system and, at least one equipment associated thereto, included in the cabin, controls all the functions and communicates with other sets defined by a lighting column and a cabin, as well as, bidirectionally, with the system administrator.

Thus, the computer system controls all the functions of the set of the lighting column with the cabin and, in its case, with the vending device, being able to be communicated with other equivalent computer systems of other sets of lighting column with cabin and, in its case, with vending device and with the system administrator.

The network analyzer equipment comprises different measuring devices with the object of analyzing electrical currents, being able to measure, among others, flows, voltages between phases, current, power, consumption, connection of other devices without previous authorization, etc.

Using the multifunction display and the speaker, controlled by the computer system, written and sound information will be transmitted in real time.

The socket outlets for charging vehicles, electrical apparatus and devices and power supply have different voltages and are powered by the power grid of the system, such that they are controlled by the control computer system, being, usually, disabled and being activated when required by a user.

On the other side, each of the socket outlets has a safety interlock, which is unlocked by the end of providing the service and being paid, that is, the user will not be able to remove the charging pin until the service has been completed and the payment has been made in its case, serving, also, as a security element and guarantee that no one disconnects the service without being determined by the user. This is especially useful in the case of renting the electric vehicle, because it will not be able to be withdrawn from the outlet until the corresponding deposit has been paid.

The data and/or communication and/or supply outlets for portable computer equipment for the connection to the network are controlled by the control computer system and the equipment interconnected thereto.

By means of the recording equipment, controlled by the computer system, and the memory equipment forming part thereof, all the desired information will be stored, both captured by the cameras and that obtained from the different services or that processed by the computer systems.

The payment means are defined by a series of inlets for coins and/or bills and/or cards and are controlled by the computer system and the equipment interconnected thereto.

The alarm button is connected directly with the system administrator and/or with an alarm central, such that the same will be available to the users protected by a safety glass or similar but easy to break in if necessary, such that together with the intercom the bidirectional connection will be allowed.

On the other side, the lighting column to which the corresponding cabin is associated has, at least, one lighting fixture powered by the general network and/or any other utility grid and, at least, one hook-like anchoring, for throwing aerial power cables for different apparatus.

In this way, the lighting column lighting fixture(s) will provide light for general illumination of the area, and where necessary, light to carry out the various actions to be performed and the same may include different elements.

Thus, the lighting column to which the corresponding cabin is associated can include a device for generating alternative energy and a device for power storage, such as some batteries, such that it could be, at least, one photovoltaic panel or one or several wind turbines.

Likewise, the lighting column can include, at least, one fixed and/or motorized recording camera which will allow monitoring the environment and which cameras, controlled by the system administrator, can be made available to other persons, organisms or to the Security Bodies and Forces.

Also, the lighting column can include, at least, one device for capturing and measuring meteorological and environmental parameters and the cabin includes one analyzer equipment thereof, being controlled by the computer system and the equipment interconnected thereto, such as anemometers, thermometers, CO₂ meters, nitrogen meters, radiation meters or other.

The charging and power supply outlets are powered by the device for generating alternative energy and at the lack of it, they are powered by the general network, being controlled by the control computer system.

The lighting column can include, at least, one image and/or text and/or sound emission display, controlled by the computer system and managed, through it, by the system administrator, for information and/or advertising.

In a practical implementation, the system comprises a plurality of sets defined by a lighting column and a cabin associated with each other and, optionally, with a vending device, which sets are communicated with each other and one of them, the main one, is bidirectionally communicated with the system administrator, the rest of the secondary sets can share elements with the main set.

In an alternative practical implementation of the invention, the system comprises a plurality of sets defined by a lighting column and a cabin associated with each other and, optionally, with a vending device, each one of them being communicated, bidirectionally, with the system administrator.

The cabin forming the system can include a computer display and a keyboard protected in an anti-vandalism case and controlled by the computer system, such that any person, identifiable by the system, could use said service, with the object of carrying out consultations or tasks, for example, accessing internet.

Likewise, the cabin forming the system can include a compressor with a pressurized air inlet, being controlled by the computer system, by means of which the users may inflate the tires of their vehicles or other objects.

The cabin associated to the lighting column includes some means for transport and anchoring and attaching to the field, such that it will allow its assembly, eventually, in places where it is not usually necessary, but where, occasionally, its temporary location can provide a series of services as, for example, for a few days in which an event is held and a lot of people concentrate or as a substitute for a fixed system when that has suffered a breakdown.

In a first practical implementation of the invention, the system is integrated into a preinstalled illumination line, inserting a set as a substitute for a preinstalled streetlight (lighting column), being associated to the rest of streetlights for its control by it and by the system administrator.

In a second practical implementation of the invention, the system is integrated into a preinstalled illumination line, associating a cabin to a streetlight of the line, controlling all the streetlights of the line by it and by the system administrator.

Likewise, the system can be integrated into a preinstalled illumination line, keeping all the lighting fixtures or a part of them, including, at least, two sets, one of them acting as main set and the rest as secondary sets.

Likewise the system can be used for remote control and/or telemanagement of other equipment or systems different from it and by the system administrator.

To complement the description that is going to be made, and with the object of helping towards a better understanding of the features of the invention, is attached to the present specification, a set of drawings whose figures by way of illustration and not limitation, represent the most characteristic details of the invention.

### BRIEF DESCRIPTION OF THE DRAWINGS

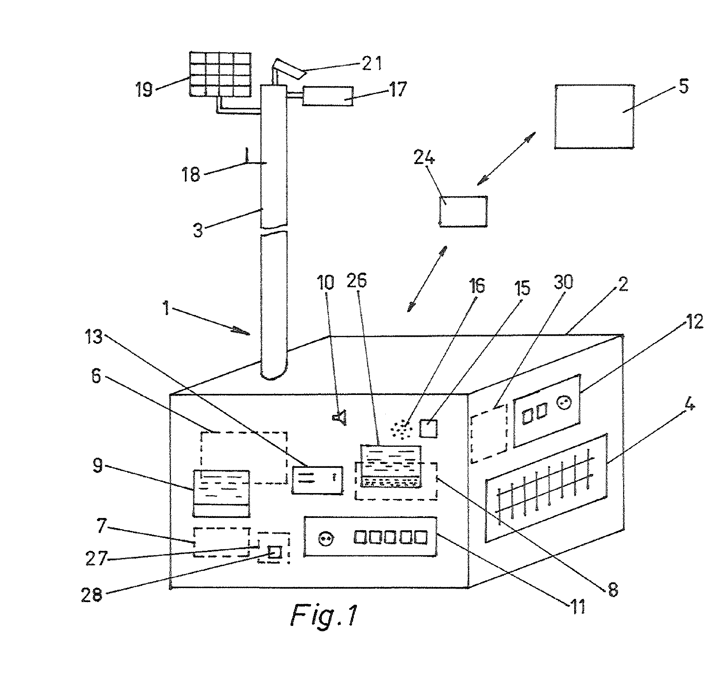

Figure 1. Shows a view of a cabin associated to a lighting column with the corresponding lighting fixture and which cabin includes a variety of components to provide different services to users, among which is a vending device for the supply of products.

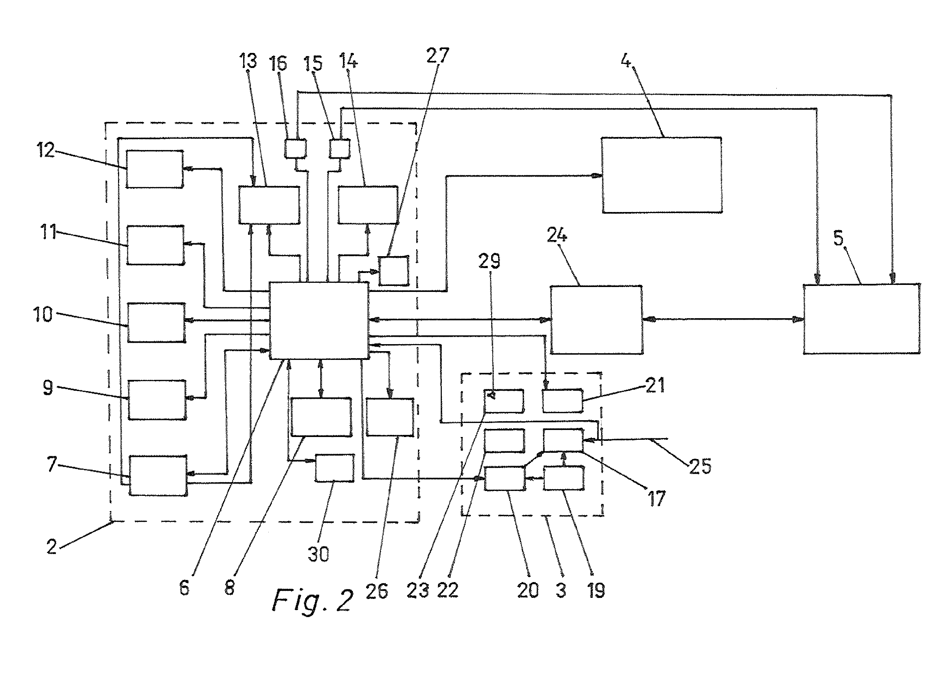

Figure 2. Shows a view of a schematic block diagram.

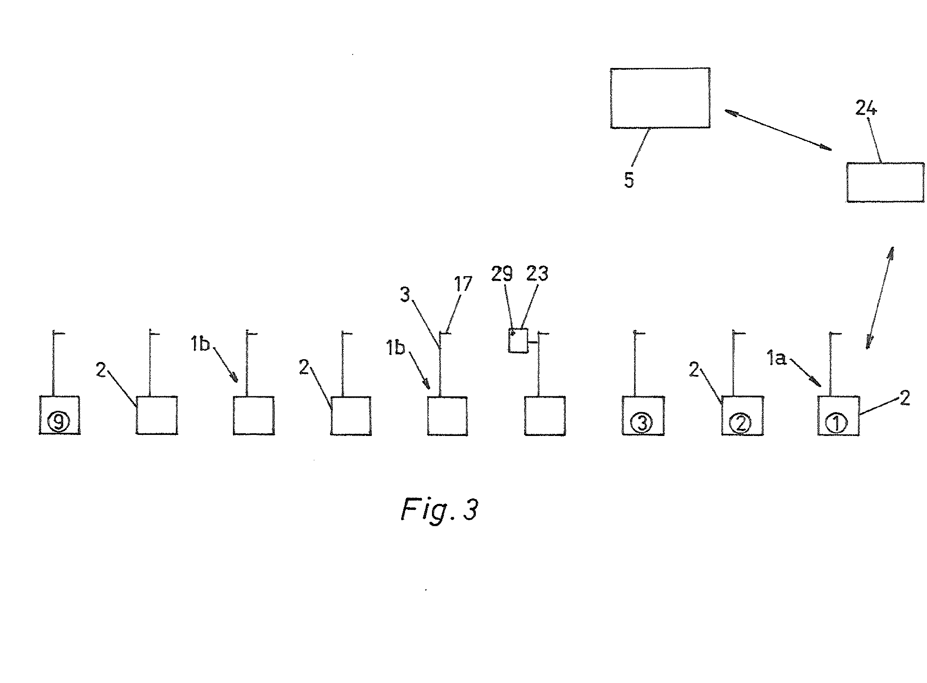

Figure 3. Shows a schematic view of a practical implementation wherein the system consists of nine sets, one of them acting as main set and the rest as secondary sets, the main set being communicated, bidirectionally, with the system administrator and the rest of secondary sets are communicated with the main set sharing elements.
Figure 4. Shows a schematic view of a practical implementation wherein the system controls and manages several groups of a plurality of sets, and wherein the main sets of the plurality of sets are communicated with the system administrator bidirectionally, while each one of the main sets is communicated with its secondary sets.

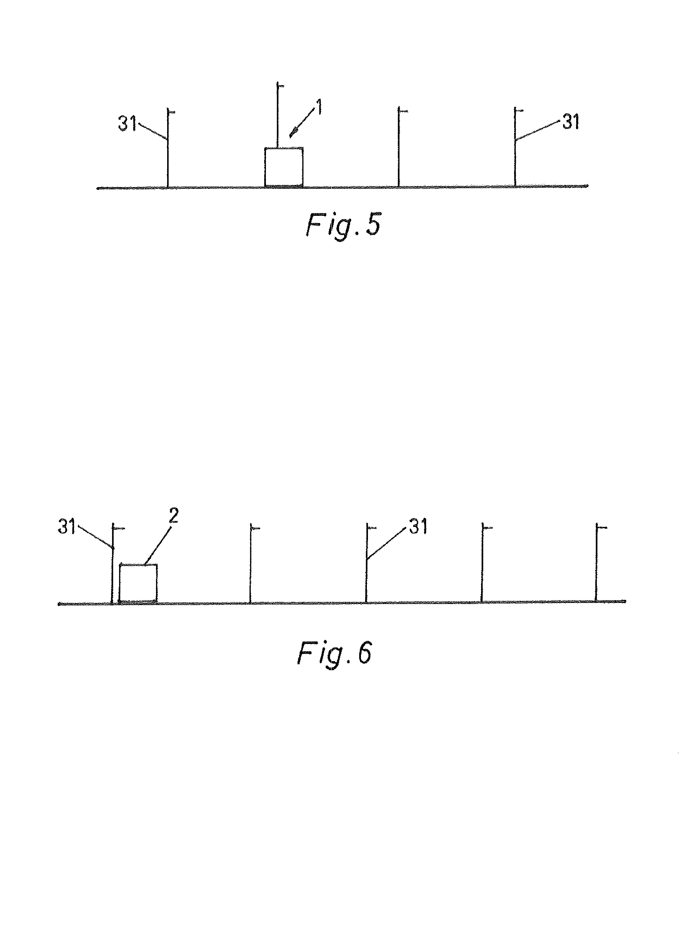

Figure 5. Shows a first practical implementation wherein in a line of illumination streetlights a set has been inserted in place of one of the streetlights thereby obtaining control thereof through it.
Figure 6. Shows a second practical implementation wherein in a line of illumination streetlights a cabin has been installed associating it to one of them, obtaining control thereof through it.

### DESCRIPTION OF A PREFERRED EMBODIMENT

In view of the figures discussed and in accordance with the numbering adopted we can see how the energy charging and communication control and management system is based on, at least, one set 1 consisting of a cabin 2 associated to a lighting column 3 and, optionally, to a vending device 4, being bidirectionally communicated with a central system administrator 5, such that the cabin 2, the lighting column 3 and the vending device 4 can form a unitary set or they may be composed of independent elements but associated with each other.

For the bidirectional communication, with the central system administrator 5, through the Internet or any other means of transmission 24, the cabin 2 includes a computer system 6 with a specific software, a communications system 30 and a communications protocol controlling all the functions, as well as, at least, one equipment 7 provided with a multiprocessor with communications and several peripheral connection inputs and outputs and external actuators, which equipment 7 is interconnected with the computer system 6.

Likewise, the cabin 2 includes a network analyzer equipment 8 consisting of different electrical current analysis measuring apparatus, being able to measure, among others, flows, voltages between phases, current, power, consumption, connection of other devices without previous authorization, etc.

The cabin 2 includes a multifunction display 9 and a speaker 10, controlled by the computer system 6, by means of which written and sound information will be transmitted in real time.

The socket outlets 11 for charging vehicles, electrical apparatus and devices and power supply have different voltages and are powered by the power grid 25 of the system, such that they are controlled by the control computer system 6, being, usually, disabled and being activated when required by a user. Thus, among different voltages there will be, at least, 230 V., and at least one from 36 V., 24 V. and 12 V., which will be powered by the general network or any other.

On the other side, each one of the socket outlets 11 presents a safety interlock, which is unlocked by the end of providing the service and being paid, that is, the user will not be able to remove the charging pin until the service has been completed and the payment has been made in its case, serving, also, as a security element and guarantee that no one disconnects the service without being determined by the user.

The socket outlets 11 can be bases or sockets, i.e. male or female, and there will be both, depending on whether the connecting device has one or the opposite. The base will accept, thus, socket outlets, and in the case of a male it will have an extender device to gain access to the female base in the device to be connected. Whether male or female it will have the anchoring device for the indicated functions.

The data and/or communication and/or supply outlets 12 for portable computer equipment for the connection to the network are controlled by the control computer system 6 and the equipment 7 interconnected thereto, such that a computer cable can be plugged to a connector of the cabin or a cabin cable can be plugged into the jack on the computer.

The payment means 13 are defined by a series of inlets for coins and/or bills and/or cards and are controlled by the computer system 6 and the equipment 7 interconnected thereto.

By means of the recording equipment 14, controlled by the computer system 6, and the memory equipment forming part thereof, all the desired information will be stored, both captured by the cameras and that obtained from the different services.

The alarm button 15, protected by a safety glass or similar, but easy to break in if necessary, is connected directly with the system administrator 5 and/or with an alarm central, such that the same will be available to the users protected by a safety glass or similar but easy to break in if necessary, such that together with the intercom 16 the bidirectional connection with the aforementioned system administrator and/or with the alarm central will be allowed.

On the other side, the lighting column 3 to which the cabin 1 is associated has, at least, one lighting fixture 17 powered by the general network and/or any other utility grid and, at least, one hook-like anchoring 18, for throwing aerial power cables for different apparatus or as a layout support for any type of cable.

In this way, the lighting fixture(s) 17 of the lighting column 3 will provide general illumination of the area and where necessary, light to carry out the various actions to be performed and the same may include different elements.

Thus, the lighting column 3 associated to the cabin 2 can include a device for generating alternative energy 19 and a device for power storage, such as some batteries 20, such that the device for generating alternative energy could be, at least, one photovoltaic panel or one or several wind turbines.

Likewise, the lighting column 3 can include, at least, one fixed and/or motorized recording camera 21 which will allow monitoring the environment and which cameras, controlled by the system administrator 5, through the computer system 6, can be made available to other persons, organisms or to the Security Bodies and Forces.

Also, the lighting column 3 can include, at least, one device for capturing and measuring meteorological and environmental parameters 22 for which the cabin 2 includes an analyzer equipment of the same, being controlled by the computer system 6 and the equipment 7 interconnected thereto, such as anemometers, thermometers, CO₂ meters, nitrogen meters, radiation meters or other.

The charging and power supply outlets 11 are powered by the device for generating alternative energy 19 and at the lack of it, they are powered by the general network, being controlled by the control computer system 6.

The lighting column 3 can include, at least, one image and/or text and/or sound emission display 23 with a speaker 29, controlled by the computer system 6 and managed, through it, by the system administrator 5, for information and/or advertising.

The cabin 2 forming the system can include a computer display and a keyboard 26 protected in an anti-vandalism case and controlled by the computer system 6, such that any person, identifiable by the system, could use said service, with the object of carrying out consultations or tasks, for example, accessing internet.

Likewise, the cabin 2 forming the system can include a compressor 27 with a pressurized air inlet 28, being controlled by the computer system 6, by means of which the users may inflate the tires of their vehicles or other objects.

The cabin associated to the lighting column includes some means for its transport and anchoring and attaching to the field, such that it will allow its assembly, eventually, in places where it is not usually necessary, but where, occasionally, its temporary location can provide a series of services as, for example, for a few days in which an event is held and a lot of people concentrate or as a substitute for a fixed system when that has suffered a breakdown.

From this basic structure we will describe a performance that can be based on an existing streetlights line in any street of any city, for example, a 225 meters street with streetlights interspersed every 25 meters, that is, it has nine standard streetlights. Said streetlights will be powered from a switchboard from the utility supply in the area, and being all in series, there will be a streetlight to be the first to receive the supply.

Based on this the nine existing streetlights can be replaced by nine sets 1, defined by a cabin 2 associated to a lighting column 3 and, optionally, to a vending device 4, which sets 1 are communicated with an administrator 5 forming an energy charging and communication control and management system, the owner may be the City Council of the town and the system administrator 5 a functionary of the City Council itself, located with his/her computers in an office thereof.

Thus, in a first practical implementation, the system administrator 5 is connected to the network and in bidirectional direct communication with the computer system 6 of a main set, which main set 1 a is communicated with the rest of secondary sets 1 b.

In this way, the set communicated with the system administrator 5 acts as main set 1 a and the rest of sets, act as secondary sets 1 b.

Thus, the main set 1a can be installed in the place where the first streetlight of the line was placed and the other eight streetlights will be substituted by respective secondary sets 1 b.

In this performance the streetlights, previously installed, can be utilized and to install a cabin 2 provided or not with a vending device 4, or the existing streetlights can be replaced by respective unitary sets grouping together a cabin 2, a lighting column 3 and an integrated vending device 4, which can be connected to the corresponding power supply network which already powered the streetlight.

Likewise, in a practical implementation, the sets 1 forming the system can be directly communicated with the system administrator 5.

Thus, the main set 1 a will have equipment for measuring environmental factors and the rest of secondary sets 1b will not have it, since due to the proximity, measurements provided by the equipment for measuring environmental factors of the secondary sets 1 b would have almost no variation from one to another.

The main set 1a will have a vending device 4 integrated in the cabin 2 and that will sell, for example, magazines.

The secondary set 1 b, arranged in position 5, with a vending device 4 will provide beverages, the secondary set 1b, arranged in position 9, will provide sandwiches and sweets and the rest of secondary sets will not have vending device, all of it, by the proximity of each other, considering as good that there are three points of sale in the 225 meters of the street.

The main set 1a will have a motorized IP security camera, which in its normal state will focus in a fixed mode the main set itself 1 a.

The secondary set 1b, arranged in position 5, will have three cameras, one that will be fixed and focus the set itself and the other two cameras which will be motorized will focus, one of them, the secondary sets arranged in positions 2, 3 and 4 one of them and the other one the secondary sets 1 b arranged in positions 6, 7 and 8.

The secondary set 1b arranged in position nine will have a single motorized camera the same as the one of the main set 1 a in position one, in its normal state will focus on itself.

All the sets 1 having cameras will also have recording elements associated thereto.

Likewise, all the lighting columns of said sets 1 will have a solar panel on its top, except for, for example, the one arranged in the position nine which will have a solar panel and a wind turbine, since it is in a corner of normal movement of strong air currents and the sets arranged in positions three, four and five that will not have any of solar panel or wind turbine, for being in places shielded for the sun by the building opposite and not enough air circulating in that stretch of the street. All the sets having means for production of alternative energies, will also have storage batteries.

In a practical embodiment of the invention the set 1 will have, at least, four power supply outlets 11 for vehicles, two for bicycles and other two for other uses, allowing that on each one of them the corresponding vehicle, either private or rental, can be connected.

In a practical embodiment of the invention the sets 1, 5 and 9 will have a computer display and a keyboard 26 protected in a anti-vandalism case and controlled by the computer system 6, such that any person, identifiable by the system, could use said service, with the object of carrying out consultations or tasks, for example, accessing internet.

Since each one of the sets 1 will have several parking facilities for vehicles, each one of them will be able to supply power to all the corresponding cars or other vehicles, either private or rental.

Likewise, all the sets 1 will have the payment means 13, for all kinds of current currency, tickets, credit or debit cards, as well as user cards and chip cards. Likewise, all of them will have a multifunction display 9 to inform users of the status of the charge, the cost of it and other diverse information.

In this way, not only you can know the status of card charging but the charging thereof could be carried out, such as, for example, the parking card, the prepaid phone card or other.

Moreover, all the sets have in their cabin multifunction display and a speaker, which is where the user is informed of the services that the system can provide, their state and their rates, and allowing the user choosing the service, where it will be provided, reporting its status during use, allowing to choose the payment means and reporting the vicissitudes during the same, etc., the screen being therefore the user's guide for their operations and also is able to speak so it can help the visually impaired in handling the equipment.

On the other side, all or some sets 1 may include in their lighting column 3 one or several large displays 23 provided with speakers 29 for being able to share images and/or sound, introduced by the system administrator 5 and having advertising purposes, that can be bought to the administrator or information introduced by the administrator because it is of interest.

All the sets 1 will have access to high speed internet available to the users, which would be routed to the computer system 6 of the main set 1 a and from it to the network connection.

Likewise, all the sets 1 will have an alarm button available to the public such that when necessary the users communicate with the system administrator 5 or an alarm central.

An example of practical use of the system by users could be the following:
A user that needs to charge his/her electric vehicle would park in an available space in front of a set 1 and introduce a means of payment in the corresponding inlet for the payment means 13, he/she would select in the multifunction display 9 one nozzle of the charging outlets 11 and plug the outlet of his/her vehicle starting the charging. During the charging time he/she can go for a walk with confidence that nobody will remove the charging nozzle, because it has an interlock system that will not allow to unplug the car until the payment has been made using the password, and also a security camera 21 will be recording the entire operation, such that in any incidence, it would be recorded. In the case of non-payment his/her card would be retained, the system would send a notice to the system administrator 5 and the person would be identified by his/her personal credit card.

Another user would do the same with his/her vehicle, but when wanting to pay cash, he/she would introduce the user card which would have, since the system administrator 5 would have provided a nominative card to all users requiring it, being able to leave unworriedly until the end of the vehicle charging, since until he/she did not pay cash, the hose cannot be removed and therefore collect his/her nominative user card, besides the whole process being recorded as well as in the previous case. In the case of non-payment his/her card would be retained, the system would send a notice to the system administrator 5 and the person would be identified by his/her nominative user card.

Simultaneously, a third user who also wanted to charge his/her car and would like to pay with his/her chip card in which there is not enough balance, the system would allow the chip card recharging, putting him/her in touch with his/her bank via IP and allowing it to do the transfer for charging the card. This user, while charging his/her vehicle, could connect his/her laptop to the data and communications outlet 12 of the set 1 and could work in the interior of his/her car as if it were his/her office during the charging of his/her vehicle.

When these three people end up charging their vehicles, they would go to the multifunction display 9 and in it they will be notified of the amount to be paid by the charging service, they would make the payment by any of the means previously mentioned for each one and they could pick up their hoses and leave with their vehicles.

The user of the third vehicle in addition to the cost of the charging would be charged the cost of the network connection he/she used to work. If any of the vehicles after completing the charging would want to leave it parked at that site, the system would give him a parking ticket that he/she would pay on the basis of the extra time that he/she planned to stay.

While all this was happening, other users may have charged their electric bikes in one of the sets 1, other users would have charged their mobile phones, other users would have bought magazines and picked up drinks and snacks in vending devices and other citizens would have plugged their laptops to the communication outlets 12 in order to access the network and make any consultation and/or tasks for which they needed connection. Some might, in the absence of laptop and needing to connect to the network, use the display and keyboard available for this purpose to satisfy their need for connection.

All of them would have been charged for the services provided.

Likewise, other driver may have taken the opportunity while performing the charging, to plug in his/her vacuum cleaner to clean his/her car, charging the system both services and other driver still having a petrol car and therefore did not need charging, however he has used the outlet available for vacuuming his/her car, paying the electricity service that the system has provided and he has consumed in his/her operation of vacuum.

Also the owner or manager of the system can provide rental services for electric vehicles, so that if a citizen would like to rent a car or bike he/she would only have to go to the multifunction display, pay the corresponding deposit, by the means of payment he/she chooses, and the system will release the hub and provide the corresponding means to access and use the vehicle, whether for example a key or a card or other, which serves to open and/or release the vehicle and start it (car) or give power (bike).

When the user finishes using the vehicle, he/she may return it at any of the other sets of the system distributed over the geographical location in question, reconnecting the vehicle to charge, returning the key or actuation of the same in its case and paying the rental service. In the case of not returning the vehicle, the alleged thief would be clearly identified by both the documentation he/she had to provide the system to rent the vehicle and for the images of the existing cameras for that purpose, while, and until he/she was located, the owner or manager of the system would have the given deposit. The system administrator will always know and through it, the location of all the vehicles available for rent, since they will all be plugged into a concrete charging outlet among those distributed at the place in question.

It is for this reason that the system could notify, by mobile messages for example, the people requiring that rental service, the nearest location to his/her current position in which there is an electric vehicle from among those offered by the system, available for rent.

Also and in the same way, if a premise next to one of the sets 1 requires power supply a cable from a lighting column could be provided, lying in height through the hooks of the same, in order to plug the needed machines, without affecting the pedestrians and paying the electricity consumed by any of the available payment means.

Simultaneously, the system administrator 5 has been informed at all times of the environmental parameters that govern in the street, so that if, for example, the system has reported an excessive rise of CO₂ in that street, through that information it could have prohibited circulation along that street until the restoration of the normal parameters. It has even been able to warn the public of that fact, using to provide such information the existing large screens 23 in the lighting columns 3, and temporarily suspending the issuance of publicity that was being carrying out on the same.

Similarly, and at his will, the system administrator 5 has been able to see what was happening on the sets 1 with no more than viewing any of the cameras being able to manipulate any of the motorized cameras to check the traffic conditions or any other event.

Likewise, the system administrator 5 would have received in real time all proceeds of the various electric charging services, communications services, rental and vending.

In addition, the computer system has been able to provide the performance of operations, discriminating that produced by the energy charging through the general network, or the energy from the means of production themselves, and informing the utilization percentage of the general network to feed the whole system with respect to the percentage in which the own means for generating the same have been used.

Thus, the system allows optimizing the delivery of services in such a way that, while it has been able to supply self-produced energy, it has done it so, by pulling from the network only when it has been necessary and all this in an automated way, because, the computer systems 6 themselves have been programmed in that way and the corresponding interconnected equipment 7 so have given instructions for the actuators that regulated the supply of both types of energy, leading to one or the other depending on the optimization of the needs.

The system administrator 5 likewise has invoiced for all ads that have been contracted and that have been played on the large screen 23 of the lighting columns 3.

At a certain point the system administrator 5 may have changed the issuance of ads to inform pedestrians through text on the same screens 23 and audio emitted from speakers 29 associated to the large screens 23 of the lighting columns 3.

The system itself causes the turning on of the lighting of the sets 1 having the same level of illumination than when there were only the streetlights; furthermore, the system administrator has been able to have real time information on the consumption of each streetlight, as well as about their operating state and their breakdowns to act accordingly.

The system administrator can, if necessary and using the same, control a line of conventional streetlights. To do this these standard streetlights would have to be provided with some bidirectional reception and communications equipment by any means of transmission, similar to the so-called system equipment 7, logically appropriate and designed to fulfill its specific function.

Likewise, the system administrator will be able to use the system equipment to control from its position other equipments already telemanaged, or which are capable of telemanagement, for example a city's traffic lights network, the control of bus frequency, or the management of parking spaces in a public or private garage. In this case the equipments with which the system is provided will need to be put in communication with the other systems already telemanaged or desired to telemanage, the system being able to be a simple communications link or the main control element of the other systems network, for example the traffic lights, the buses or the garage.

An important advantage is that, for example, an indisposed user can press the alarm button of one of the sets 1 such that the system administrator 5 who was on duty may direct a camera to see the situation and communicate by intercom with the affected and once the situation has been assessed, will act accordingly from the administrator. The same shall operate to any other incident, for example, if the police should act.

The sequence would have been the same or similar if instead of being in a space where there was already illumination, we would have mounted the sets 1 in a place where there was no infrastructure, but their owners had decided to provide the users of the area the services provided by the sets 1, for example, a leisure area without previous infrastructure, whether public or private.

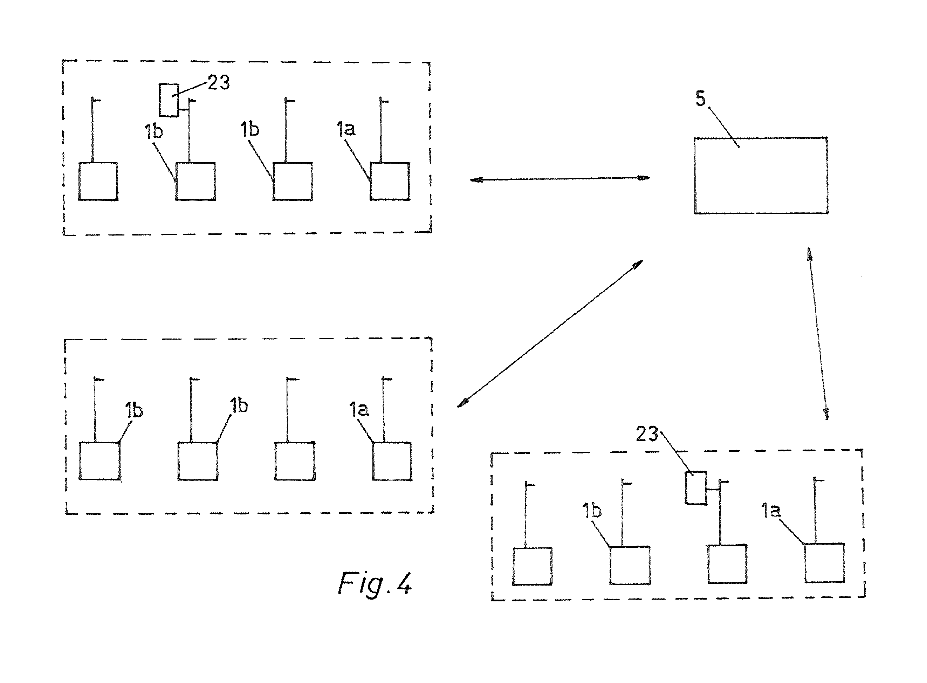

Figure 4 of the drawings is a schematic view of a practical implementation in which the system administrator 5 controls and manages several groups of a plurality of sets 1 and wherein the main sets 1a of the plurality of sets communicate with the system administrator 5 bidirectionally, while each one of the main sets 1 a communicates with its secondary sets 1 b.

Likewise, the main sets 1a can be communicated with each other bidirectionally.

A set 1 can be placed in any space whether public or private, covered or uncovered, on the soil surface or under the same.

In a practical implementation of the invention in a line of standard streetlights 31, of any street, urbanization, square, etc.., a set 1 can be interspersed as a substitute for one of the streetlights, such that the said set 1 will provide the described services and also can control the rest of the streetlights, likewise, the system administrator 5 being able to take control through it. That is, a single set 1 can be installed to control a line of standard streetlights.

In a second variant of practical implementation a cabin 2 can be associated to a streetlight in a line of standard streetlights 31 of any street, urbanization, square, etc.., the aforementioned standard streetlight acting as an illumination element, by way of a lighting column, allowing control of all streetlights.

Obviously, a line of 31 standard streetlights can be associated with a variable number of sets 1 or cabins 2, all based on what might interest or desire, for example, a City Council, such that one of the sets will act as main set and the rest as secondary sets.

In summary: When placing an equipment of the system of the invention we will obtain:
General services:
   - Illumination in the area, the illumination device being able to be controlled in all its parameters.
   - Allowing the establishment of overhead lines and support for passage of cables through the hook-like systems of the lighting column.
Services for the Users:
   - Supply and/or charging of machinery, equipment and electrical devices of all kinds.
   - Recharging all types of payment cards.
   - Communications of all kinds.
   - Acquisition of all types of exhibits for sale.
   - Rental of electric vehicles.
   - Inflation by pressurized air.
   - User safety in the operations through surveillance cameras.
Services for all citizens:
   - Permanent information on environmental conditions in the area where it is located.
   - Information of all kinds, including advertising made available to the public by the system administrator.
   - Alarm button connected to the administrator/alarm central for emergencies.
Services for the owner, administrator and/or manager:
   - Self-generation of electricity.
   - Exploitation of the system through the sale of energy, communications, products of all kinds and advertising.
   - Telemanagement and remote control of the system.
   - Telemanagement and remote control of the different systems communicated among themselves and forming group.
   - Simultaneous telemanagement and remote control of different groups of systems of the same type.
   - Possibility of joint telemanagement and/or remote control of other systems of different types.
General services.
   - Possibility of using the system for emergency situations, by different types of public agencies, including State Security services and Health and Emergency services.

## Claims

1. **System for controlling and managing of the energy charging, communication and illumination,** which system is powered by electricity provided by the general network and/or any other grid based on public or private lighting columns, such that the system comprises, among other means, electric charging means, as well as electrical connection and communication means with payment means for said services and a computer system, **characterized in that** the system comprises, at least, a set (1) consisting of;
◆ a lighting column (3) with, at least, a lighting fixture (17) and with, at least, one hook-like anchoring means (18) at a high height;
◆ a cabin (2) provided with:
◆ a computer system (6) with an specific software and a communications protocol;
● a communications system (30);
● at least, one equipment (7), interconnected with the computer system (6), provided with a multiprocessor, with communications and several inputs and outputs for connection to external peripherals and actuators;
● a network analyzer equipment (8);
● a multifunction display (9) and a speaker (10);
● socket outlets for charging (11) vehicles, electrical apparatus and devices and power supply;
● data and/or communication and/or supply outlets (12) for portable computer equipment;
● payment means (13) for the provided services;
● at least, one data recording equipment (14);
● an alarm button (15) and an intercom (16), and;
as well as:
◆ one central administrator (5) communicated with, at least, a set defined by a cabin (2) and a lighting column (3).

2. **System for controlling and managing of the energy charging, communication and illumination,** according to claim 1, **characterized in that** the set (1) consisting of a cabin (2) and a lighting column (3) includes, at least, one vending machine (4) associated thereto and controlled by the computer system (6) and the equipment (7) interconnected thereto.

3. **System for controlling and managing of the energy charging, communication and illumination,** according to claim 1, **characterized in that** the cabin (2) comprises a vending device (4) with selection buttons of the product, with the payment means (13) of the cabin and controlled by the computer system (6) and the equipment (7) interconnected thereto.

4. **System for controlling and managing of the energy charging, communication and illumination,** according to claim 1, **characterized in that** the computer system (6) with a specific software and with communications protocol, included in the cabin (2), controls all the functions and is communicated, bidirectionally, with the system administrator (5).

5. **System for controlling and managing of the energy charging, communication and illumination,** according to claim 1, **characterized in that** the computer system (6) with a specific software, a communications protocol, a communications system and, at least, one equipment (7) interconnected with it, included in the cabin (2), controls all the functions and communicates with other sets (1) defined by a cabin (2) and a lighting column (3), as well as, bidirectionally, with the system administrator (5).

6. **System for controlling and managing of the energy charging, communication and illumination,** according to claim 1, **characterized in that** the network analyzer equipment (8), comprises different electrical current analysis measuring apparatus.

7. **System for controlling and managing of the energy charging, communication and illumination,** according to claim 1, **characterized in that** by means of the multifunction display (9) and the speaker (10), controlled by the computer system (6), written and sound information is transmitted in real time.

8. **System for controlling and managing of the energy charging, communication and illumination,** according to claim 1, **characterized in that** the socket outlets (11) for charging vehicles, electrical apparatus and devices and power supply have different voltages, are powered by the power grid of the system, and are controlled by the control computer system (6).

9. **System for controlling and managing of the energy charging, communication and illumination,** according to claims 1 and 8, **characterized in that** each one of the socket outlets comprises a safety interlock, which is unlocked by the end of providing the service and being paid.

10. **System for controlling and managing of the energy charging, communication and illumination,** according to claim 1, **characterized in that** the data and/or communication and/or supply outlets (12) for portable computer equipment for the connection to the network are controlled by the control computer system (6) and the equipment (7) interconnected thereto.

11. **System for controlling and managing of the energy charging, communication and illumination,** according to claim 1, **characterized in that** the payment means (13) defined by a series of inlets for coins and/or bills and/or cards are controlled by the computer system (6) and the equipment (7) interconnected thereto.

12. **System for controlling and managing of the energy charging, communication and illumination,** according to claim 1, **characterized in that** by means of the recording equipment (14), controlled by the computer system (6), all the desired information is stored, both captured by the cameras (21) and that obtained from the different services.

13. **System for controlling and managing of the energy charging, communication and illumination,** according to claim 1, **characterized in that** the alarm button (15) is connected directly with the system administrator (5) and/or with an alarm central.

14. **System for controlling and managing of the energy charging, communication and illumination,** according to claim 1, **characterized in that** the intercom (16) has a bidirectional communication with the system administrator (5).

15. **System for controlling and managing of the energy charging, communication and illumination,** according to claim 1, **characterized in that** the lighting column (3) is associated to the cabin (2) and has, at least, one lighting fixture (17) powered by the general network (25) and/or any other grid and, at least, one hook-like anchoring (18), as an anchor and restraint for throwing aerial power cables for different apparatus.

16. **System for controlling and managing of the energy charging, communication and illumination,** according to claim 1, **characterized in that** the lighting column (3) associated to the cabin (2) includes a device for generating alternative energy (19) and a device for power storage, such as batteries (20).

17. **System for controlling and managing of the energy charging, communication and illumination,** according to claims 1 and 16, **characterized in that** the lighting column (3) includes, at least, one photovoltaic panel.

18. **System for controlling and managing of the energy charging, communication and illumination,** according to claims 1 and 16, **characterized in that** the lighting column (3) includes a wind turbine.

19. **System for controlling and managing of the energy charging, communication and illumination,** according to claims 1 and 16, **characterized in that** the lighting column (3) includes, at least, one fixed and/or motorized recording camera (21).

20. **System for controlling and managing of the energy charging, communication and illumination,** according to claims 1 and 16, **characterized in that** the lighting column (3) includes, at least, one device for capturing and measuring meteorological and environmental parameters (22) and the cabin (2) includes one analyzer equipment thereof, being controlled by the computer system (6) and the equipment (7) interconnected thereto.

21. **System for controlling and managing of the energy charging, communication and illumination,** according to claims 1 and 16, **characterized in that** the charging and power supply outlets (11) are powered by the device for generating alternative energy (19) and at the lack of it, said charging and power supply outlets are powered by the general network (25), being controlled by the control computer system (6).

22. **System for controlling and managing of the energy charging, communication and illumination,** according to claims 1 and 16, **characterized in that** the lighting column (3) includes, at least, one images and/or text and/or sound emission display (23), controlled by the computer system (6) and managed, through it, by the system administrator (5).

23. **System for controlling and managing of the energy charging, communication and illumination,** according to claim 1, **characterized in that** the system comprises a plurality of sets (1) defined by a cabin (2) and a lighting column (3) associated with each other and, optionally, with a vending device (4), which sets are communicated with each other and one of them, the main set (1 a), is bidirectionally communicated with the system administrator (5), the rest of the secondary sets (1 b) being able to share elements with the main set.

24. **System for controlling and managing of the energy charging, communication and illumination,** according to claims 1 and 21, **characterized in that** the set (1) defined by a cabin (2) and a lighting column (3) associated with each other and, optionally, with a vending device (4), acting as main set (1 a) and which is communicated with the rest of secondary sets (1 b).

25. **System for controlling and managing of the energy charging, communication and illumination,** according to claim 1, **characterized in that** the system comprises a plurality of sets (1) defined by a cabin (2) and a lighting column (3) associated with each other and, optionally, with a vending device (4), each one of them being bidirectionally communicated with the system administrator (5).

26. **System for controlling and managing of the energy charging, communication and illumination,** according to claim 1, **characterized in that** the cabin (2) forming the system includes a computer display and a keyboard (26) protected in an anti-vandalism case and controlled by the computer system (6).

27. **System for controlling and managing of the energy charging, communication and illumination,** according to claim 1, **characterized in that** the cabin (2) forming the system includes a compressor with a pressurized air inlet, being controlled by the computer system (6).

28. **System for controlling and managing of the energy charging, communication and illumination,** according to claim 1, **characterized in that** the cabin (2) associated to the lighting column (3) includes means for transport and anchoring and attaching to the field.

29. **System for controlling and managing of the energy charging, communication and illumination,** according to claim 1, **characterized in that** the system is integrated into a preinstalled illumination line, inserting a set (1) as a substitute for a preinstalled streetlight (31), being associated to the rest of streetlights (31) for its control by it and by the system administrator (5).

30. **System for controlling and managing of the energy charging, communication and illumination,** according to claim 1, **characterized in that** the system is integrated into a preinstalled illumination line, associating a cabin (2) to a streetlight (31) of the line, controlling all the streetlights (31) of the line by it and by the system administrator (5).

31. **System for controlling and managing of the energy charging, communication and illumination,** according to claims 1 and 23, **characterized in that** the system is integrated into a preinstalled illumination line, keeping all the lighting fixtures or a part of them, including, at least, two sets (1), one of them acting as main set and the rest as secondary sets.

32. **System for controlling and managing of the energy charging, communication and illumination,** according to claim 1, **characterized in that** the system is used for remote control and/or telemanagement of other equipment or systems different from it.

33. **System for controlling and managing of the energy charging, communication and illumination,** according to claim 1, **characterized in that** the system is used for remote control and/or telemanagement of electric vehicles rental service.

34. **System for controlling and managing of the energy charging, communication and illumination,** according to claims 1 and 11, **characterized in that** through the payment means (13) defined by a series of card inlets the same are recharged, the recharge being controlled by the computer system (6) and the equipment (7) interconnected thereto.
